# EUROPEAN PATENT SPECIFICATION

(11) **EP 3 702 999 B1**
(45) Date of publication and mention of the grant of the patent: **17.07.2024**
(21) Application number: 19159561.0
(22) Date of filing: 27.02.2019
(51) Int. Cl.: G06Q 50/00, G06Q 50/40, G06Q 50/43, G07C 5/08

(54) **METHOD OF PERFORMING AN IMPROVED MOBILITY SERVICE**
VERFAHREN ZUR DURCHFÜHRUNG EINES VERBESSERTEN MOBILITÄTSDIENSTES
PROCÉDÉ DE RÉALISATION D'UN SERVICE DE MOBILITÉ AMÉLIORÉ

(43) Date of publication of application: 02.09.2020
(73) Proprietor: Vay Technology GmbH, 12099 Berlin (DE)
(72) Inventor: von der Ohe, Thomas, 12099 BERLIN (DE); Scelsi, Fabrizio, 12099 BERLIN (DE); Djukic, Bogdan, 12099 BERLIN (DE); Schierl, Thomas, 12099 BERLIN (DE)
(74) Representative: Eisenführ Speiser

(56) References cited:
- WO-A1-2017/172415
- US-A1- 2017 045 885
- US-B1- 10 134 286

## Description

### FIELD OF THE INVENTION

The present invention relates to a system for performing an improved mobility service. Moreover, the present invention relates to a method of performing an improved mobility service.

### BACKGROUND OF THE INVENTION

Mobility is an essential human need. Aside from the use of private vehicles, such as cars and bicycles, as well as mass transportation services, such as buses and subways, this need is met today by a growing number of shared mobility services. Examples of such services include vehicle sharing services, such as car, scooter and bike sharing, as well as ride-hailing services.

The first type is a model of rental where users rent a vehicle for typically short periods of time, often by the hour. This model is increasingly provided in urban locations by companies such as DriveNow, Car2Go, and others. It is attractive for users who make only occasional use of a vehicle, as well as others who would like occasional access to a vehicle of a different type than they use day-by-day.

In the second type of model, typically private drivers offer rides in their personal non-commercial vehicles. The connection between a user and a local driver is typically made via an online platform using e.g. an app on a smartphone. Due to differences in local regulations with respect to passenger transportation, the dissemination of this model widely differs between different countries and regions.

Compared to classical taxi services, the prices are often less expensive and the online platform simplifies both the ordering and the payment process. Known ride-hailing services include Uber, Lyft, and others.

While both types of models have their merits, they also still have various drawbacks. For example, with existing vehicle sharing solutions the user has to walk to the vehicle and, at the end of the ride, he has to park it. This not only results in inconvenience for the user, but it also increases the user's stress level as well as the total journey time. In addition, availability, e.g., how often a car is in 'acceptable' walking distance (about 300 m) from the user's current location, is low. Ride-hailing solutions, on the other hand, are more expensive than vehicle sharing. In addition, the user shares the vehicle with the driver resulting in i) no privacy for the user (e.g., for phone calls) and ii) decreased safety for the user, in case the driver has bad intentions towards the user.

Examples of systems and methods known in the art can be found in WO2017/172415 A1 (UBER TECHNOLOGIES INC [US]) and US2017/045885 A1 (OKUMURA BUNYO [US] ET AL).

### SUMMARY OF THE INVENTION

It is an object of the present invention to provide a system for performing an improved mobility service that overcomes or reduces at least some of the above-mentioned problems. It is a further object of the present invention to provide a corresponding method of performing an improved mobility service.

In a first aspect of the present invention, a system for performing an improved mobility service is presented, comprising:
- a communication unit that is adapted to receive a mobility request specifying a pick up location within a geographic region from a user;
- a vehicle that is adapted to be either remotely driven by a teleoperator via a wireless communication network or to be conventionally driven by the user;
- a teleoperator station that is adapted to be used, in response to the mobility request, by the teleoperator to drive the vehicle remotely to the pick up location;
- a handover unit that is adapted to hand over the control of the vehicle from remote driving by the teleoperator to conventional driving by the user; and
- a teleoperator station selection unit that is adapted to select the teleoperator station from a pool of teleoperator stations, wherein the selection is based on an expected latency between the teleoperator station and the vehicle.

Since the system comprises a vehicle that is remotely driven to a pick up location by a teleoperator, the user does not have to walk to the vehicle before using it. Compared to known vehicle sharing solutions, this not only may improve convenience for the user, but it may also reduce the user's stress level as well as the total journey time. Moreover, availability may be increased, since the vehicle does not have to be located within a short distance from the pick up location at the time the user makes the mobility request. In addition, since the control of the vehicle is handed over from remote driving by the teleoperator to conventional driving by the user, the user can drive the car him-/herself. Compared to known ride-hailing solutions, this can make the service less expensive, since the teleoperator is not needed for driving the vehicle while it is conventionally driven by the user. Moreover, the user can enjoy his/her privacy while conventionally driving the vehicle and his/her safety from drivers with bad intentions is increased.

The wireless communication network is preferably a network that allows for a bi-directional transmission of data between the vehicle and the teleoperator station. For example, it can be a fourth generation (4G) wireless communication network or a fifth generation (5G) wireless communication network.

The vehicle is preferably a car, such as a small car, a regular car, or a Sports Utility Vehicle (SUV), a van, a truck or another type of vehicle that is adapted to be remotely driven. For example, it may also be a buggy or the like.

Preferably, the vehicle is a modified vehicle that provides the required on-board infrastructure for teleoperation. This can include actuators for controlling the vehicle, one or more capturing units for capturing a live representation of the vehicle's environment, and appropriate interfaces for bi-directional communication with the teleoperator station via the wireless communication network. The actuators can be mechanical actuators that directly actuate on the vehicle's steering wheel, speed pedal and brakes. Alternatively, already present actuators of the vehicle (e.g., for adjusting the orientation of the vehicle's wheels) may be controlled via an electronic interface.

It is preferred that the system further comprises:
- a vehicle selection unit that is adapted to select the vehicle from a pool of vehicles, wherein the selection is based on one or more characteristics selected from the group consisting of: (i) a proximity of the vehicle to the pick up location, and (ii) a fuel level or state of charge of the vehicle, and (iii) user preferences regarding the type and/or size of the vehicle,
wherein, optionally, the mobility request further specifies a drop off location within the geographic region and the selection is based on one or more characteristics selected from the group consisting of: (i) a proximity of the vehicle to the pick up location, (ii) the drop off location, (iii) a fuel level of state of charge of the vehicle, and (iv) user preferences regarding the type and/or size of the vehicle.

It is preferred that the communication unit is further adapted to send a notification that the vehicle is about to reach or has reached the pick up location to the user, wherein the notification comprises a picture captured by a camera of the vehicle.

It is further preferred that the communication unit is further adapted to receive a video data request from the user and to send, in response to the video data request, video data captured by a video camera of the vehicle to the user.

It is preferred that the communication unit is further adapted to receive a vehicle stop request from the user while the teleoperator station is used by the teleoperator to drive the vehicle remotely to the pick up location, wherein the system further comprises a vehicle stopping unit that is adapted to stop, in response to the vehicle stop request, the vehicle.

It is further preferred that the system further comprises:
- a proximity determination unit that is adapted to determine if the user is within a pre-defined proximity to the vehicle, wherein the vehicle is further adapted to unlock the driver's door if the user is within the pre-defined proximity to the vehicle.

It is preferred that the communication unit is further adapted to send, in response to an indication from the vehicle that the driver's door has been opened, a vehicle key message specifying a vehicle key to the user, wherein the vehicle is further adapted to allow the user to authenticate himself/herself with the vehicle key for conventional driving of the vehicle.

It is further preferred that the vehicle is further adapted to customize to the user, in response to a successful authentication of the user for conventional driving of the vehicle, one or more of the characteristics of the vehicle selected from the group consisting of: (i) seat adjustment, (ii) steering wheel adjustment, (iii) ambient light, (iv) rear mirror adjustment, (v) side mirror adjustment, and (vi) music station.

It is preferred that the system further comprises:
- a mobile networked terminal that is adapted to be used by the user for communicating with the communication unit and that provides a vibration feature that can be sensed by the user, wherein the mobile networked terminal is adapted to increase the intensity of the vibration with an decreasing proximity of the user to the vehicle.

It is further preferred that the vehicle comprises a visual indicator with a configurable appearance that is adapted to allow the user to recognize the vehicle, wherein the system further comprises a visual indicator appearance configuration unit that is adapted to configure the appearance of the visual indicator to be different between vehicles from a pool of vehicles, wherein the communication unit is further adapted to send an indication of the configured appearance of the visual indicator of the vehicle to the user.

According to the present invention, a method of performing an improved mobility service is presented, comprising:
- receiving, by a communication unit, a mobility request specifying a pick up location within a geographic region from a user;
- in response to the mobility request, a teleoperator using a teleoperator station to remotely drive a vehicle via a wireless communication network to the pick up location; and
- handing over, by a handover unit, the control of the vehicle from remote driving by the teleoperator to conventionally driving by the user,
wherein the teleoperator station is selected from a pool of teleoperator stations, wherein the selection is based on an expected latency between the teleoperator station and the vehicle.

It shall be understood that the system for performing an improved mobility service of claim 1 and the method of performing an improved mobility service of claim 11 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

These and other aspects of the present invention will be apparent from and elucidated with reference to the embodiments described hereinafter. In the following drawings:
- Fig. 1: shows schematically and exemplarily an embodiment of a system for performing an improved mobility service, and
- Fig. 2: shows a flowchart exemplarily illustrating an embodiment of a method of providing an improved mobility service.

### DETAILED DESCRIPTION OF EMBODIMENTS

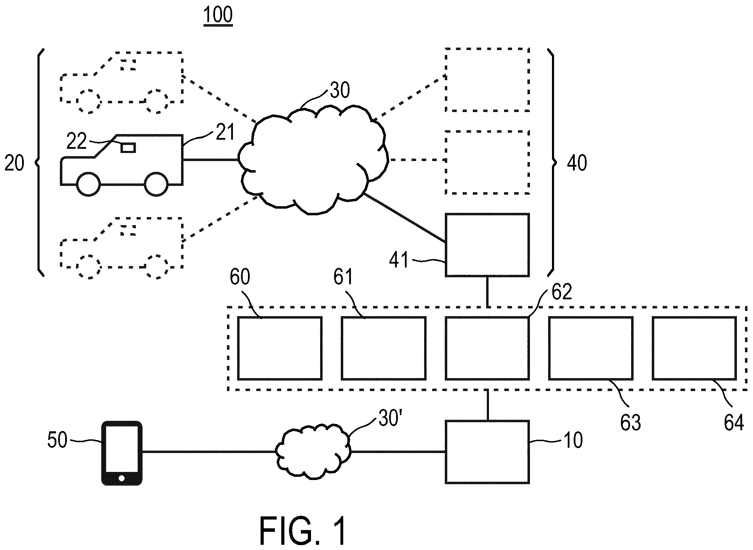

Fig. 1 shows schematically and exemplarily an embodiment of a system 100 for performing an improved mobility service. The system 100 comprises a communication unit 10 that is adapted to receive a mobility request specifying a pick up location within a geographic region from a user.

The system 100 further comprises a vehicle 21 that is adapted to be either remotely driven by a teleoperator via a wireless communication network 30 or to be conventionally driven by a user, as well as a teleoperator station 41 that is adapted to be used, in response to the mobility request, by the teleoperator to drive the vehicle 21 remotely to the pick up location.

In this embodiment, the vehicle 21 is a modified vehicle that provides the required on-board infrastructure for teleoperation. This can include actuators for controlling the vehicle, one or more video cameras for capturing the vehicle's environment, and appropriate interfaces for bi-directional communication with the teleoperator station 41 via the wireless communication network 30. The actuators can be mechanical actuators that directly actuate the vehicle's steering wheel, speed pedal and brakes. Since the vehicle 21 is also adapted to be conventionally driven by a user, the actuators should preferably be designed and arranged in the vehicle 21 such that they do not restrain the user in the conventional driving of the vehicle 21. Alternatively, already present actuators of the vehicle (e.g., for adjusting the orientation of the vehicle's wheels) may be controlled via an electronic interface.

The wireless communication network 30 is a network that allows for a bi-directional transmission of data between the vehicle 21 and the teleoperator station 41. For example, it can be a fourth generation (4G) wireless communication network or a fifth generation (5G) wireless communication network. The transmitted data includes control commands for controlling the actuators in the vehicle 21, which are transmitted from the teleoperator station 41 to the vehicle 21, as well as the captured video data of the vehicle's environment, which are transmitted from the vehicle 21 to the teleoperator station 41. In addition to this, further data may be exchanged between the vehicle 21 and the teleoperator station 41, such as information about the status of the vehicle 21 (e.g., speed, rpm, error information, and the like).

The teleoperator station 41 comprises a direct interface for the teleoperator. This includes one or more monitors or other display device(s) (e.g., a head-mounted display (HMD), a projection display, or the like) on which the transmitted video data from the one or more cameras of the vehicle 21 are shown, such that the teleoperator is able to see the vehicle's environment and to provide control commands to the vehicle 21. To this end, the teleoperator station 41 comprises appropriate control devices, such as a steering wheel and pedals to provide the basic functionality. For additional control of the vehicle 21, such as its blinkers, wipers, lights, etc. additional control keys or the like may be provided by the teleoperator station 41.

In this embodiment, the one or more video cameras of the vehicle 21 provide a 360 degree view of the vehicle's environment, which provides an all-round vision for the teleoperator. Alternatively, the one or more video cameras may provide a number of separate views, e.g., a front view, a rear view and two side views. In view of the limited data rates provided by current wireless communication technology, such as 4G/5G communication networks, the captured video data is preferably transmitted in a compressed form to enable a speedy transmission via the wireless communication network 30. For example, the video data may be compressed using modern video coding technology, such as H.264/AVC (Advanced Video Coding) or H.265/HEVC (High Efficiency Video Coding), wherein the video coding technology is preferably run in a modus that allows for ultra low delay encoding and decoding. For example, the video coding technology may be run such that for encoding a video frame only already known video frames are used as a reference to improve coding efficiency. In general, it is advantageous if the latency in both directions of the data transmission is kept low in order to make it safer and easier for the teleoperator to drive the vehicle 21 remotely and allow him/her to timely react to dynamic events that occur in the vehicle's environment.

With returning reference to Fig. 1, the user can send the mobility request to the communication unit 10 from a networked computing device 50, e.g. a PC, laptop, or mobile terminal, that is connected to the Internet. In this embodiment, this device is a mobile networked terminal 50 that provides an application, e.g., a mobile app, for sending the mobility request to the communication unit 10 via a wireless communication network 30'. This may be the same network as the wireless communication network 30 or it may be a different network.

The mobility request specifies a pick up location within a geographic region, i.e., a location at which the user desires to pick up the vehicle 21. The geographic region may refer to a region in which the improved mobility service is provided, for example, an urban region or a particular state or country. The mobile app provides an interface for the user to select the pick up location. This can be realized e.g. by providing the user with a displayed map on which he/she can select the pick up location and/or by allowing the user to type the address of the pick up location into the mobile networked terminal 50. It is also possible that the mobile app accesses GPS data acquired by the mobile networked terminal 50 and preselects the pick up location based on the user's current GPS location. The interface can then provide the user with the possibility to manually change the preselected location to the desired pick up location. Moreover, there may also be an update to the pick up location due to traffic situation, which is communicated to the user by appropriate means, e.g. by a visual indication in the mobile app.

In addition to the pick up location, the mobility request may also specify a drop off location within the geographic region, i.e., a location at which the user desires to drop off the vehicle 21.

The system 100 further comprises a vehicle selection unit 60 that is adapted to select the vehicle 21 from a pool 20 of vehicles as well as a teleoperator station selection unit 61 that is adapted to select the teleoperator station 41 from a pool 40 of teleoperator stations.

The selection of the vehicle 21 from the pool 20 of vehicles is based on one or more characteristics selected from the group consisting of: (i) a proximity of the vehicle 21 to the pick up location, (ii) a fuel level or state of charge of the vehicle 21, and (iii) user preferences regarding the type and/or size of the vehicle 21. For example, if the selection is based on the proximity of the vehicle 21 to the pick up location, the vehicle 21 can be selected such that it is already close to the pick up location. This allows the vehicle 21 to quickly reach the pick up location in order to avoid unnecessary waiting for the user. Moreover, it may reduce the energy consumption and overall costs of the improved mobility service, and it may also reduce congestion of the vehicles, service and/or streets. Additionally or alternatively, if the selection is based on a fuel level or state of charge of the vehicle 21, the vehicle 21 can be selected such that it is sufficiently charged or fueled.

If the mobility request further specifies a drop off location within the geographic region, the selection is based on one or more characteristics selected from the group consisting of: (i) a proximity of the vehicle 21 to the pick up location, (ii) the drop off location, (iii) a fuel level or state of charge of the vehicle 21, and (iv) user preferences regarding the type and/or size of the vehicle 21. For example, if the selection is based on all three characteristics, the vehicle 21 can be can be selected such that it is already close to the pick up location and that it is sufficiently charged or fueled to reach the drop off location without having to be recharged or fueled, if the drop off location is within a reasonable distance from the pick up location and it is assumed that the user chooses a direct route from the pick up location to the drop off location.

In the present invention the selection of the teleoperator station 41 from a pool 40 of teleoperator stations is based on an expected latency between the teleoperator station 41 and the vehicle 21. As mentioned above, it is advantageous if the latency in both directions of the data transmission is kept low in order to make it safer and easier for the teleoperator to drive the vehicle 21 remotely and allow him/her to timely react to dynamic events that occur in the vehicle's environment. Thus, if the selection is based on the expected latency between the teleoperator station 41 and the vehicle 21, the teleoperator station 41 can be selected such that a high quality remote driving experience is provided to the teleoperator. For example, the teleoperator station 41 may be closer to the vehicle 21 in terms of a distance in network switching units, cable length and/or other parameters resulting in the end-to-end latency of the wireless communication network 30 between the teleoperator station 41 and the vehicle 21, wherein a placement of the teleoperator station 41 at a network edge of the wireless communication network 30 may improve the experienced latency.

Of course, the selection of the vehicle 21 from the pool 20 of vehicles and/or the selection of the teleoperator station 41 from the pool 40 of teleoperator stations may further be based on additional characteristics. For example, it may be based on user preference of vehicle type (small car, regular car, van, et cetera) and/or on the availability / occupancy of a particular teleoperator station.

Once the vehicle 21 and the teleoperator station 41 have been selected, the teleoperator can use the teleoperator station 41 to drive the vehicle 21 remotely to the pick up location. When the vehicle 21 comes to a halt at the pick up location, the teleoperator can 'leave' the vehicle 21 and the teleoperator station 41 can again be selected by the teleoperator station selection unit 61 for use by the teleoperator to remotely drive another vehicle from the pool 40 of vehicles. This allows to save human resources for driving the vehicles in the improved mobility service. Moreover, it increases efficiency resulting in an affordable and more convenient mobility service for the user.

With returning reference to Fig. 1, the communication unit 10 is further adapted to send a notification that the vehicle 21 is about to reach or has reached the pick up location to the user, wherein the notification includes a picture captured by a camera of the vehicle 21. The picture can then be shown to the user via the mobile app. This may make it easier for the user to find the vehicle 21 at the pick up location. Preferably, the camera that captures the picture is a front camera of the vehicle 21.

The mobile app may also allow the user to send a video data request to the communication unit 10. In this case, the communication unit 10 is further adapted to receive the video data request from the user and to send, in response to the video data request, video data captured by a video camera of the vehicle 21 to the user. By providing not just a picture but video data to the user, it can be even easier for the user to find the vehicle 21 at the pick up location. Preferably, the video camera that captures the video data is also a front camera of the vehicle 21.

In this embodiment, the communication unit 10 is further adapted to receive a vehicle stop request from the user while the teleoperator station 41 is used by the teleoperator to drive the vehicle 21 remotely to the pick up location. The system 100 further comprises a vehicle stopping unit 63 that is adapted to stop, in response to the vehicle stop request, the vehicle 21. This feature is advantageous when the user sees that the vehicle 21 approaches the pick up location and wants to save the time the teleoperator may need to correctly park the vehicle 21 at the pick up location.

The system 100 further comprises a proximity determination unit 62 that is adapted to determine if the user is within a pre-defined proximity to the vehicle 21, for instance, within a radius of 10, 15 or 25 meters from the vehicle 21. This can be achieved, for example, by comparing the user's current GPS location as provided by the GPS data that is accessed via the mobile app and GPS data of the vehicle 21. The vehicle 21 is further adapted to unlock the driver's door if the user is within the pre-defined proximity to the vehicle 21. This increases the comfort for the user, since he/she does not have to unlock the vehicle 21 himself /herself.

When the user opens the driver's door, the vehicle 21 generates a respective indication and communicates it to the system 100. The communication unit 10 is further adapted to send, in response to the indication from the vehicle 21, a vehicle key message specifying a vehicle key to the user. The vehicle 21 is further adapted to allow the user to authenticate himself/herself with the vehicle key for conventional driving of the vehicle 21. The authentication may be performed, for instance, using Bluetooth, preferably Bluetooth Low Energy (also referred to as Bluetooth LE, BLE or Bluetooth Smart), or Near Field Communication (NFC) mechanisms. In one embodiment, the vehicle key message is received by the mobile networked terminal 50, which connects to the vehicle 21 using Bluetooth Low Energy. The mobile networked terminal 50 then uses the Bluetooth Low Energy connection to authenticate the user with the vehicle key for conventional driving of the vehicle 21. It can also be foreseen that the identification of the user in the vehicle 21 is based on the signal strength of the Bluetooth and/or NFC and/or similar communication within the vehicle 21.

Preferably, the authentication process is vehicle agnostic. For example, let's assume that a first user requested a first vehicle and that a second user requested a second vehicle to about the same pick up location at the same. If the first user opens the second vehicle, the authentication process preferably still works.

The first user can then drive away with the second vehicle and the second user can drive away with the first vehicle.

In this embodiment, the vehicle 21 is further adapted to customize to the user, in response to a successful authentication of the user for conventional driving of the vehicle 21, one or more of the characteristics of the vehicle 21 selected from the group consisting of: (i) seat adjustment, (ii) steering wheel adjustment, (iii) ambient light, (iv) rear mirror adjustment, (v) side mirror adjustment, and (vi) music station. This further increases the comfort for the user, since he/she does not have to adjust these characteristics of the vehicle 21 himself/herself. This information about personal characteristics is stored by the system 100 in order for the user to experience this convenience in any vehicle from the pool 20, independent of the specific vehicle 21.

The system 100 further comprises a handover unit 22 that is adapted to hand over the control of the vehicle 21 from remote driving by the teleoperator to conventional driving by the user. This may include, in response to the successful authentication of the user for conventional driving of the vehicle 21, one or more of the vehicle 21 (i) performing the above-described customization; (ii) confirming the successful authentication (e.g. by an LED turning green); (iii) switching into a state where it can be conventionally driven by the user (e.g. the user may do nothing but more the gear from P to D to start driving), and (iv) greeting the user (e.g. via audio "Welcome [...]" or via a display "Welcome [...]", where [...] may be the name of the user).

The user can now conventionally drive the vehicle 21 to the drop off location. When the user leaves the vehicle 21, this may be again detected by the vehicle 21. The vehicle 21 may then be adapted to lock the vehicle's doors after a pre-defined time, e.g., 10 seconds after the user left the vehicle 21. This may also be realized using Bluetooth, particular, Bluetooth Low Energy, or Near Field Communication mechanisms. For example, the vehicle 21 may be adapted to detect that the signal strength of the Bluetooth Low Energy connection between the user's mobile networked terminal 50 and the vehicle 21 becomes low or that the connection is lost completely, indicating that the user has left the vehicle 21. Preferably, the vehicle 21 is further adapted to generate a respective indication and to communicate it to the system 100. The vehicle 21 can then be returned to the pool 20 and re-used by the system 100 to serve another user in response to a respective mobility request.

Alternatively, the doors of the vehicle 21 may be locked via the mobile app. For example, the mobile app may provide an interface with a button that reads "Close the vehicle in 15 seconds" or the like. In order to allow the user to leave the vehicle 21 without returning it to the pool 20, the interface may also provide a button that reads "Hold the vehicle" or the like.

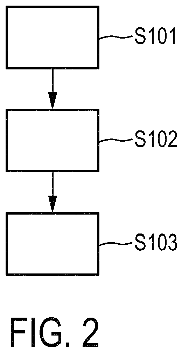

In the following, an embodiment of a method of providing an improved mobility service will exemplarily be described with reference to a flowchart shown in Fig. 2.

In step S101, a communication unit 10 receives a mobility request specifying a pick up location within a geographic region from a user.

In step S102, in response to the mobility request, a teleoperator uses a teleoperator station 41 to remotely drive a vehicle 21 via a wireless communication network 30 to the pick up location.

In step S103, a handover unit 22 hands over the control of the vehicle 21 from remote driving by the teleoperator to conventional driving by the user.

The method of providing an improved mobility service may be performed by the system 100 for providing an improved mobility service described with reference to Fig. 1 above.

In addition or as an alternative to the provision of a picture captured by a camera of the vehicle 21 or the provision of video data captured by a video camera of the vehicle 21, there may be other means provided for making it easier for the user to find the vehicle 21 at the pick up location. For instance, the mobile networked terminal 50 can provide a vibration feature that can be sensed by the user, wherein the mobile networked terminal 50 is adapted to increase the intensity of the vibration with an decreasing proximity of the user to the vehicle 21. To this end, the proximity determination unit 62 may not only be adapted to determine if the user is within a pre-defined proximity to the vehicle 21, but may be adapted to continuously determine proximity information that is provided to the mobile networked terminal 50. Furthermore, the user may be identified by the vehicle 21 via face recognition techniques using one or more cameras installed in or at the vehicle 21.

In another variant, the vehicle 21 comprises a visual indicator with a configurable appearance that is adapted to allow the user to recognize the vehicle 21. The system 100 further comprises a visual indicator appearance configuration unit 63 that is adapted to configure the appearance of the visual indicator to be different between vehicles from the pool 20 of vehicles, and the communication unit 10 is further adapted to send an indication of the configured appearance of the visual indicator of the vehicle 21 to the user. The visual indicator may be, for instance, an LED color light that is attached to the vehicle 21, wherein the color is configured by the visual indicator appearance configuration unit 63 to differ between vehicles from the pool 20 of vehicles. This, however, does not mean that the visual indicators of all vehicles must be configured to have different colors. Instead, it can be sufficient when the colors of the visual indicators of vehicles that are simultaneously present at the pick up location are configured to be visually discernable. This allows the user to find the correct vehicle even if multiple vehicles 21 from the pool of vehicles 20 are simultaneously present at the pick up location, e.g., at an exit of an airport terminal.

In addition or as an alternative to the Bluetooth-based authentication process, an authentication based on QR codes may be used. For example, when the user is at the vehicle 21, he/she may have to scan a QR code that is attached somewhere on the vehicle 21 (e.g. under the lock of the driver's door). This information is then sent from user's mobile networked terminal 50 to the system 100, which then sends a command to the vehicle 21 to unlock the doors. The unlocking of the doors may further depend on the proximity of the user to the vehicle 21. For example, the vehicle's doors may only be unlocked if the user and the vehicle 21 are within certain radius based on their respective GPS location (e.g. within 20 meters).

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

The present invention relates to a system for performing an improved mobility service. The system comprises a communication unit, a vehicle, a teleoperator station, and a handover unit. The communication unit is adapted to receive a mobility request specifying a pick up location within a geographic region from a user. The vehicle is adapted to be either remotely driven by a teleoperator via a wireless communication network or to be conventionally driven by the user. The teleoperator station is adapted to be used, in response to the mobility request, by the teleoperator to drive the vehicle remotely to the pick up location. The handover unit is adapted to hand over the control of the vehicle from remote driving by the teleoperator to conventional driving by the user.

## Claims

1. A system (100) for performing an improved mobility service, comprising:
- a communication unit (10) that is adapted to receive a mobility request specifying a pick up location within a geographic region from a user; and
- a vehicle (21) that is adapted to be either remotely driven by a teleoperator via a wireless communication network (30) or to be conventionally driven by the user,
**characterized in that** the system (100) further comprises:
- a teleoperator station (41) that is adapted to be used, in response to the mobility request, by the teleoperator to drive the vehicle (21) remotely to the pick up location;
- a handover unit (22) that is adapted to hand over the control of the vehicle (21) from remote driving by the teleoperator to conventional driving by the user; and
- a teleoperator station selection unit (61) that is adapted to select the teleoperator station (41) from a pool (40) of teleoperator stations, wherein the selection is based on an expected latency between the teleoperator station (41) and the vehicle (21).

2. The system (100) according to claim 1, further comprising:
- a vehicle selection unit (60) that is adapted to select the vehicle (21) from a pool (20) of vehicles, wherein the selection is based on one or more characteristics selected from the group consisting of: (i) a proximity of the vehicle (21) to the pick up location, (ii) a fuel level or state of charge of the vehicle (21), and (iii) user preferences regarding the type and/or size of the vehicle (21),
wherein, optionally, the mobility request further specifies a drop off location within the geographic region and the selection is based on one or more characteristics selected from the group consisting of: (i) a proximity of the vehicle (21) to the pick up location, (ii) the drop off location, (iii) a fuel level or state of charge of the vehicle (21), and (iv) user preferences regarding the type and/or size of the vehicle (21).

3. The system (100) according to claim 1 or 2, wherein the communication unit (10) is further adapted to send a notification that the vehicle (21) is about to reach or has reached the pick up location to the user, wherein the notification comprises a picture captured by a camera of the vehicle (21).

4. The system (100) according to any of claims 1 to 3, wherein the communication unit (10) is further adapted to receive a video data request from the user and to send, in response to the video data request, video data captured by a video camera of the vehicle (21) to the user.

5. The system (100) according to any of claims 1 to 4, wherein the communication unit (10) is further adapted to receive a vehicle stop request from the user while the teleoperator station (41) is used by the teleoperator to drive the vehicle (21) remotely to the pick up location, wherein the system (100) further comprises a vehicle stopping unit (63) that is adapted to stop, in response to the vehicle stop request, the vehicle (21).

6. The system (100) according to any of claims 1 to 5, further comprising:
- a proximity determination unit (62) that is adapted to determine if the user is within a pre-defined proximity to the vehicle (21), wherein the vehicle (21) is further adapted to unlock the driver's door if the user is within the pre-defined proximity to the vehicle (21).

7. The system (100) according to any of claims 1 to 6, wherein the communication unit (10) is further adapted to send, in response to an indication from the vehicle (21) that the driver's door has been opened, a vehicle key message specifying a vehicle key to the user, wherein the vehicle (21) is further adapted to allow the user to authenticate himself/herself with the vehicle key for conventional driving of the vehicle (21).

8. The system (100) according to claim 7, wherein the vehicle (21) is further adapted to customize to the user, in response to a successful authentication of the user for conventional driving of the vehicle (21), one or more of the characteristics of the vehicle (21) selected from the group consisting of: (i) seat adjustment, (ii) steering wheel adjustment, (iii) ambient light, (iv) rear mirror adjustment, (v) side mirror adjustment, and (vi) music station.

9. The system (100) according to any of claims 1 to 8, further comprising:
- a mobile networked terminal (50) that is adapted to be used by the user for communicating with the communication unit (10) and that provides a vibration feature that can be sensed by the user, wherein the mobile networked terminal (50) is adapted to increase the intensity of the vibration with an decreasing proximity of the user to the vehicle (21).

10. The system (100) according to any of claims 1 to 9, wherein the vehicle (21) comprises a visual indicator with a configurable appearance that is adapted to allow the user to recognize the vehicle (21), wherein the system (100) further comprises a visual indicator appearance configuration unit (63) that is adapted to configure the appearance of the visual indicator to be different between vehicles from a pool (20) of vehicles, wherein the communication unit (10) is further adapted to send an indication of the configured appearance of the visual indicator of the vehicle (21) to the user.

11. A method of performing an improved mobility service, comprising:
- receiving (S101), by a communication unit (10), a mobility request specifying a pick up location within a geographic region from a user,
**characterized in that** the method further comprises:
- in response to the mobility request, a teleoperator using (S102) a teleoperator station (41) to remotely drive a vehicle (21) via a wireless communication network (30) to the pick up location; and
- handing over (S103), by a handover unit (22), the control of the vehicle (21) from remote driving by the teleoperator to conventional driving by the user,
wherein the teleoperator station (41) is selected from a pool (40) of teleoperator stations, wherein the selection is based on an expected latency between the teleoperator station (41) and the vehicle (21).

## Patentansprüche

1. System (100) zum Durchführen eines verbesserten Mobilitätsdienstes, umfassend:
- eine Kommunikationseinheit (10), die angepasst ist, eine Mobilitätsanforderung, die einen Abholort innerhalb einer geografischen Region angibt, von einem Benutzer zu empfangen; und
- ein Fahrzeug (21), das angepasst ist, entweder von einem Teleoperator über ein drahtloses Kommunikationsnetz (30) ferngesteuert gefahren zu werden oder vom Benutzer herkömmlich gefahren zu werden,
**dadurch gekennzeichnet, dass** das System (100) des Weiteren umfasst:
- eine Teleoperator-Station (41), die angepasst ist, als Reaktion auf die Mobilitätsanforderung von dem Teleoperator benutzt zu werden, um das Fahrzeug (21) ferngesteuert zu dem Abholort zu fahren;
- eine Übergabeeinheit (22), die angepasst ist, die Steuerung des Fahrzeugs (21) von der Fernsteuerung durch den Teleoperator an das herkömmliche Fahren durch den Benutzer zu übergeben; und
- eine Teleoperator-Stations-Auswahleinheit (61), die angepasst ist, die Teleoperator-Station (41) aus einem Pool (40) von Teleoperator-Stationen auszuwählen, wobei die Auswahl auf einer erwarteten Latenzzeit zwischen der Teleoperator-Station (41) und dem Fahrzeug (21) basiert.

2. System (100) nach Anspruch 1, des Weiteren umfassend:
- eine Fahrzeugauswahleinheit (60), die angepasst ist, das Fahrzeug (21) aus einem Pool (20) von Fahrzeugen auszuwählen, wobei die Auswahl auf einer oder mehreren Eigenschaften basiert, die aus der Gruppe ausgewählt sind, die aus Folgendem besteht: (i) einer Nähe des Fahrzeugs (21) zu dem Abholort, (ii) einem Kraftstoffstand oder einem Ladezustand des Fahrzeugs (21) und (iii) Benutzerpräferenzen hinsichtlich des Typs und/oder der Größe des Fahrzeugs (21),
wobei, optional, die Mobilitätsanforderung weiterhin einen Absetzort innerhalb der geographischen Region spezifiziert und die Auswahl auf einer oder mehreren Eigenschaften basiert, die aus der Gruppe ausgewählt sind, die aus Folgendem besteht: (i) einer Nähe des Fahrzeugs (21) zu dem Abholort, (ii) dem Absetzort, (iii) einem Kraftstoffstand oder einem Ladezustand des Fahrzeugs (21), und (iv) Benutzerpräferenzen hinsichtlich des Typs und/oder der Größe des Fahrzeugs (21).

3. System (100) nach Anspruch 1 oder 2, wobei die Kommunikationseinheit (10) des Weiteren angepasst ist, eine Benachrichtigung, dass das Fahrzeug (21) dabei ist, den Abholort zu erreichen oder diesen erreicht hat, an den Benutzer zu senden, wobei die Benachrichtigung ein von einer Kamera des Fahrzeugs (21) aufgenommenes Bild umfasst.

4. System (100) nach einem der Ansprüche 1 bis 3, wobei die Kommunikationseinheit (10) des Weiteren angepasst ist, eine Videodatenanforderung von dem Benutzer zu empfangen und als Reaktion auf die Videodatenanforderung Videodaten, die von einer Videokamera des Fahrzeugs (21) aufgenommen wurden, an den Benutzer zu senden.

5. System (100) nach einem der Ansprüche 1 bis 4, wobei die Kommunikationseinheit (10) des Weiteren angepasst ist, eine Fahrzeuganhalteanforderung von dem Benutzer zu empfangen, während die Teleoperatorstation (41) von dem Teleoperator verwendet wird, um das Fahrzeug (21) ferngesteuert zu dem Abholort zu fahren, wobei das System (100) des Weiteren eine Fahrzeuganhalteeinheit (63) umfasst, die angepasst ist, als Reaktion auf die Fahrzeuganhalteanforderung das Fahrzeug (21) anzuhalten.

6. System (100) nach einem der Ansprüche 1 bis 5, des Weiteren umfassend:
- eine Nähebestimmungseinheit (62), die angepasst ist, zu bestimmen, ob sich der Benutzer in einer vordefinierten Nähe zu dem Fahrzeug (21) befindet, wobei das Fahrzeug (21) des Weiteren angepasst ist, die Fahrertür zu entriegeln, wenn sich der Benutzer in der vordefinierten Nähe zu dem Fahrzeug (21) befindet.

7. System (100) nach einem der Ansprüche 1 bis 6, wobei die Kommunikationseinheit (10) des Weiteren angepasst ist, als Reaktion auf eine Anzeige des Fahrzeugs (21), dass die Fahrertür geöffnet wurde, eine Fahrzeugschlüsselnachricht, die einen Fahrzeugschlüssel angibt, an den Benutzer zu senden, wobei das Fahrzeug (21) des Weiteren angepasst ist, es dem Benutzer zu ermöglichen, sich mit dem Fahrzeugschlüssel für das herkömmliche Fahren des Fahrzeugs (21) zu authentifizieren.

8. System (100) nach Anspruch 7, wobei das Fahrzeug (21) des Weiteren angepasst ist, als Reaktion auf eine erfolgreiche Authentifizierung des Benutzers für das konventionelle Fahren des Fahrzeugs (21) eine oder mehrere der Eigenschaften des Fahrzeugs (21), die aus der Gruppe ausgewählt sind, die aus Folgendem besteht: (i) Sitzeinstellung, (ii) Lenkradeinstellung, (iii) Umgebungslicht, (iv) Rückspiegeleinstellung, (v) Seitenspiegeleinstellung, und (vi) Musiksender, an den Benutzer anzupassen.

9. System (100) nach einem der Ansprüche 1 bis 8, des Weiteren umfassend:
- ein mobiles vernetztes Endgerät (50), das angepasst ist, von dem Benutzer zur Kommunikation mit der Kommunikationseinheit (10) verwendet zu werden, und das ein Vibrationsmerkmal bereitstellt, das von dem Benutzer wahrgenommen werden kann, wobei das mobile vernetzte Endgerät (50) angepasst ist, die Intensität der Vibration mit einer abnehmenden Nähe des Benutzers zu dem Fahrzeug (21) zu erhöhen.

10. System (100) nach einem der Ansprüche 1 bis 9, wobei das Fahrzeug (21) einen visuellen Indikator mit einem konfigurierbaren Erscheinungsbild umfasst, der angepasst ist, dem Benutzer zu ermöglichen, das Fahrzeug (21) zu erkennen, wobei das System (100) des Weiteren eine Konfigurationseinheit (63) für das Erscheinungsbild des visuellen Indikators umfasst, die angepasst ist, das Erscheinungsbild des visuellen Indikators so zu konfigurieren, dass es sich zwischen Fahrzeugen aus einem Pool (20) von Fahrzeugen unterscheidet, wobei die Kommunikationseinheit (10) des Weiteren angepasst ist, eine Anzeige des konfigurierten Erscheinungsbildes des visuellen Indikators des Fahrzeugs (21) an den Benutzer zu senden.

11. Verfahren zum Durchführen eines verbesserten Mobilitätsdienstes, umfassend:
- Empfangen (S101), durch eine Kommunikationseinheit (10), einer Mobilitätsanforderung, die einen Abholort innerhalb einer geografischen Region angibt, von einem Benutzer,
**dadurch gekennzeichnet, dass** das Verfahren des Weiteren umfasst:
als Reaktion auf die Mobilitätsanforderung, Verwenden (S102), durch einen Teleoperator, einer Teleoperator-Station (41), um ein Fahrzeug (21) über ein drahtloses Kommunikationsnetz (30) ferngesteuert zu dem Abholort zu fahren; und
- Übergeben (S103), durch eine Übergabeeinheit (22), der Steuerung des Fahrzeugs (21) von der Fernsteuerung durch den Teleoperator an das herkömmliche Fahren durch den Benutzer,
wobei die Teleoperator-Station (41) aus einem Pool (40) von Teleoperator-Stationen ausgewählt wird, wobei die Auswahl auf einer erwarteten Latenz zwischen der Teleoperator-Station (41) und dem Fahrzeug (21) basiert.

## Revendications

1. Système (100) de réalisation d'un service de mobilité amélioré, comprenant:
- une unité de communication (10) qui est adaptée pour recevoir en provenance d'un utilisateur une demande de mobilité spécifiant un lieu de prise à l'intérieur d'une région géographique; et
- un véhicule (21) qui est adapté pour être soit conduit à distance par un téléopérateur via un réseau de communication sans fil (30) soit conduit de manière conventionnelle par l'utilisateur,
**caractérisé par le fait que** le système (100) comprend en outre:
- une station de téléopérateur (41) qui est adaptée pour être utilisé, en réponse à la demande de mobilité, par le téléopérateur pour conduire le véhicule (21) à distance jusqu'au lieu de prise;
- une unité de transfert (22) qui est adaptée pour transférer la commande du véhicule (21) de la conduite à distance par le téléopérateur à la conduite conventionnelle par l'utilisateur; et
- une unité de sélection de station de téléopérateur (61) qui est adaptée pour sélectionner la station de téléopérateur (41) parmi un pool (40) de stations de téléopérateur, dans lequel la sélection est basée sur une latence attendue entre la station de téléopérateur (41) et le véhicule (21).

2. Système (100) selon la revendication 1, comprenant en outre
- une unité de sélection de véhicule (60) qui est adaptée pour sélectionner le véhicule (21) parmi un pool (20) de véhicules, dans lequel la sélection est basée sur une ou plusieurs caractéristiques sélectionnées dans le groupe constitué de: (i) une proximité du véhicule (21) par rapport au lieu de prise, (ii) un niveau de carburant ou un état de charge du véhicule (21), et (iii) des préférences de l'utilisateur concernant le type et/ou la taille du véhicule (21),
dans lequel, en option, la demande de mobilité spécifie en outre un lieu de dépôt à l'intérieur de la région géographique et la sélection est basée sur une ou plusieurs caractéristiques sélectionnées dans le groupe constitué de: (i) une proximité du véhicule (21) par rapport au lieu de prise, (ii) le lieu de dépôt, (iii) un niveau de carburant ou un état de charge du véhicule (21), et (iv) des préférences de l'utilisateur concernant le type et/ou la taille du véhicule (21).

3. Système (100) selon la revendication 1 ou 2, dans lequel l'unité de communication (10) est en outre adaptée pour envoyer à l'utilisateur une notification indiquant que le véhicule (21) est sur le point d'atteindre ou a atteint le lieu de prise, dans lequel la notification comprend une image capturée par une caméra du véhicule (21).

4. Système (100) selon l'une quelconque des revendications 1 à 3, dans lequel l'unité de communication (10) est en outre adaptée pour recevoir une demande de données vidéo de la part de l'utilisateur et pour envoyer à l'utilisateur, en réponse à la demande de données vidéo, des données vidéo capturées par une caméra vidéo du véhicule (21).

5. Système (100) selon l'une quelconque des revendications 1 à 4, dans lequel l'unité de communication (10) est en outre adaptée pour recevoir une demande d'arrêt de véhicule de la part de l'utilisateur tandis que la station de téléopérateur (41) est utilisée par le téléopérateur pour conduire le véhicule (21) à distance jusqu'au lieu de prise, dans lequel le système (100) comprend en outre une unité d'arrêt de véhicule (63) qui est adaptée pour arrêter le véhicule (21) en réponse à la demande d'arrêt de véhicule.

6. Système (100) selon l'une quelconque des revendications 1 à 5, comprenant en outre:
- une unité de détermination de proximité (62) qui est adaptée pour déterminer si l'utilisateur se trouve à une proximité prédéfinie par rapport au véhicule (21), dans lequel le véhicule (21) est en outre adapté pour déverrouiller la porte du conducteur si l'utilisateur se trouve dans la proximité prédéfinie par rapport au véhicule (21).

7. Système (100) selon l'une quelconque des revendications 1 à 6, dans lequel l'unité de communication (10) est en outre adaptée pour envoyer à l'utilisateur, en réponse à une indication provenant du véhicule (21) et disant que la porte du conducteur a été ouverte, un message de clé de véhicule spécifiant une clé de véhicule, dans lequel le véhicule (21) est en outre adapté pour permettre à l'utilisateur/l'utilisatrice de s'authentifier avec la clé de véhicule pour la conduite conventionnelle du véhicule (21).

8. Système (100) selon la revendication 7, dans lequel le véhicule (21) est en outre adapté pour personnaliser pour l'utilisateur, en réponse à une authentification réussie de l'utilisateur pour la conduite conventionnelle du véhicule (21), une ou plusieurs des caractéristiques du véhicule (21) sélectionnées dans le groupe constitué de: (i) réglage du siège, (ii) réglage du volant, (iii) lumière ambiante, (iv) réglage des rétroviseurs, (v) réglage des rétroviseurs latéraux, et (vi) station musicale.

9. Système (100) selon l'une quelconque des revendications 1 à 8, comprenant en outre:
- un terminal mobile connecté en réseau (50) qui est adapté pour être utilisé par l'utilisateur pour communiquer avec l'unité de communication (10) et qui fournit une caractéristique de vibration qui peut être détectée par l'utilisateur, dans lequel le terminal mobile connecté en réseau (50) est adapté pour augmenter l'intensité de la vibration avec une proximité décroissante de l'utilisateur par rapport au véhicule (21).

10. Système (100) selon l'une quelconque des revendications 1 à 9, dans lequel le véhicule (21) comprend un indicateur visuel d'apparence configurable qui est adapté pour permettre à l'utilisateur de reconnaître le véhicule (21), dans lequel le système (100) comprend en outre une unité de configuration d'apparence d'indicateur visuel (63) qui est adaptée pour configurer l'apparence de l'indicateur visuel pour qu'elle soit différente entre des véhicules d'un pool (20) de véhicules, dans lequel l'unité de communication (10) est en outre adaptée pour envoyer à l'utilisateur une indication de l'apparence configurée de l'indicateur visuel du véhicule (21).

11. Procédé de réalisation d'un service de mobilité amélioré, comprenant:
- recevoir (S101) par une unité de communication (10), de la part d'un utilisateur, une demande de mobilité spécifiant un lieu de prise à l'intérieur d'une région géographique; et
**caractérisé par le fait que** le procédé comprend en outre:
- en réponse à la demande de mobilité, utiliser (S102) par un téléopérateur une station de téléopérateur (41) pour conduire à distance un véhicule (21) via un réseau de communication sans fil (30) jusqu'au lieu de prise; et
- transférer (S103) la commande du véhicule (21), par une unité de transfert (22), de la conduite à distance par le téléopérateur à la conduite conventionnelle par l'utilisateur,
dans lequel la station de téléopérateur (41) est sélectionnée parmi un pool (40) de stations de téléopérateur, dans lequel la sélection est basée sur une latence attendue entre la station de téléopérateur (41) et le véhicule (21).
